# EUROPEAN PATENT APPLICATION

(11) **EP 4 420 844 A1**
(43) Date of publication of application: **28.08.2024**
(21) Application number: 24158739.3
(22) Date of filing: 20.02.2024
(51) Int. Cl.: B25J 15/00, B25J 15/02

(54) **A BIN PICKING SYSTEM, ARRANGEMENT AND SET-UP INCLUDING METHODS FOR THE USE THEREOF**

(30) Priority: 20.02.2023 BE 202305125
(71) Applicant: Hupico BV, 9810 Eke (BE)
(72) Inventor: PAUL, Johan, Tielt (BE); HUYGHEBAERT, Pierre, Drongen (BE); MORTIER, Tobias, Gentbrugge (BE)
(74) Representative: Arnold & Siedsma

(57) **Abstract**

The invention provides a bin picking system, often also referred to as handling system or end of arm tool, to be connected to a robot for picking parts out of a bin and putting them somewhere else. The bin picking system comprises an elongated rod, an end effector and a motor in a particular configuration, such that improved handling of parts is achieved. The invention also relates to a bin picking arrangement and set-up comprising such bin picking system and a robot, respectively including a bin comprising a plurality of parts randomly stored therein. The invention further relates to methods for the use of such bin picking system, arrangement and/or set-up.

## Description

### Technical field

The invention relates to a bin picking system, often also referred to as handling system or end of arm tool, to be connected (possibly in a removable way) to a robot for picking parts out of a bin and putting (or dropping) them somewhere else. The invention also relates to a bin picking arrangement comprising such bin picking system and a robot to which the system is connected. The invention further relates to a complete bin picking set-up, having such arrangement and a bin in place. Finally, the invention relates to methods for the use of such bin picking system, arrangement and/or set-up.

### Background of the invention

Robots and other multi-axis manipulator systems are used in many industrial applications to perform precise and repetitive movements such as for example picking and placing parts from one place to another. When properly programmed, robots can be highly repeatable and reliable tools. Such parts can be picked from a bin or container, often referred to as bin picking. A vision system is generally used to determine the part location and orientation in the bin.

Extracting randomly arranged parts from a bin is a complex task for automation and robotics. Depending on the bin and part size, bin picking applications can be very challenging. More specifically, for example, part locations and orientations may be extremely variable and hard to identify. Many types of errors may occur, because for example the robot is colliding or interfering with the bin, or it is not feasible to reach a good grasp point. Possibly, the vision system fails to recognize parts for the robot to be picked up. Such errors may occur even when many parts are remaining in the bin. Whenever experiencing errors, robotic bin picking could be stopped and manual intervention could be required. Perhaps even an additional piece of equipment is needed to resolve the problem, and having the system operational again.

Robotic bin picking arrangements comprise, in addition to robots, handling devices (or bin picking systems) for picking and placing parts or goods. Using such handling devices, goods can be gripped or sucked from or out of a storage container filled with such goods, to be moved to another location. In order to also be able to pick objects from corner areas of the storage container, such handling devices may have a rod or elongate base unit, at the end of which an end effector e.g. in the form of a gripper or suction device is arranged.

Robots or robotic machinery exist with many degrees of freedom, for example six degrees of freedom referring to six axes, i.e. three translational and three rotational axes, according to which the robot is able to freely move in three-dimensional space, and can be used for robotic bin picking. The handling device or end of arm tool, however being advantageous when provided with an elongated rod for picking parts from a box, is generally limited in degrees of freedom, and therefore remaining impractical, especially when small parts need to be picked that are (randomly) stored in the box. In particular, there is room for improvement regarding the end effector, specifically in view of flexibility or movement thereof.

A few examples from the art illustrating such limitation in degrees of freedom of the end of arm tool are now referred to. In DE102021117261 B3 an end effector for a picking robot is described. The end effector has an elongated end effector main body and an article gripper or a gripper carrier with several article grippers. In addition, the end effector main body is provided with a load carrier gripper (e.g. suction gripper) for gripping containers. The end effector may further comprise a rotary bearing, via which the gripper carrier is rotatably connected to the end effector main body. The end effector comprises, at its proximal end, an interface for connection to the robot arm of the picking robot, and a case for a drive motor. In other words, the motor is provided at a certain distance from the one or more article grippers, and such distance being comparable to the length of the elongated end effector main body. EP3730257 A1 from the same applicant is somehow similar but further focuses on the rotary bearing of the end effector. In any of those two cases, the degrees of freedom of the end effector, and in particular of the one or more article grippers thereof are limited. The article grippers mounted on the rotary bearing can only rotate along one axis, and hence there is a limitation in movement of these article grippers.

In CN106002977 B a robot is disclosed with a rotation angle of an executing end, in particular a rotating member thereof at its distal end. The executing end is fixed onto the robot's arm. The rotating member is driven by a drive mechanism which comprises a rotating seat and an inner gear provided with a section of teeth, wherein the rotating seat and the inner gear are eccentrically arranged. The rotating member is fixedly connected with the rotating seat. Thus, the angle obtained each time the rotating member rotates is constant. Again a limitation in movement of the executing arm, and in particular of the rotating member thereof can be identified.

### Aim of the invention

The aim of the invention is to provide robotic machinery, in particular a robotic bin picking system with a gripping end capable for handling for example many and/or small products (although large products are not excluded), typically (randomly) stored in a box, for which a lot of possible movements and degrees of freedom of the gripping end are enabled.

### Summary of the invention

In a first aspect, the invention provides robotic machinery, in particular a robotic bin picking system to be (removably) connected to a robot with many degrees of freedom (e.g. four to six axes) for enabling robotic movements. The robotic bin picking system comprises an elongated portion such as a rod, an end effector and a motor. The rod having two ends, is at one end, also called proximal end, to be (removably) connected to the robot, for example to a robot arm, or the wrist thereof. At the other end, also called distal end, the rod is connected to the end effector such as a gripper or suction device for handling products (e.g. grabbing or sucking parts). The elongated portion or rod has a length and hence a longitudinal axis along its length. According to an embodiment, the elongated portion or rod can be rotated around its longitudinal axis. Such rotation could be enabled or driven by the robot being in direct connection with the rod at its proximal end, although this is not necessarily the case. The end effector may have one or more handling devices, and can be arranged with at least one degree of freedom (leading to possible movement or (degree of) flexibility) (in addition to the robot's), possibly one or more degrees of freedom. An additional degree of freedom (in addition to the ones provided by the robot) is for example represented by a rotation of the end effector, up to 360° either clockwise or counter-clockwise, for example around an axis being perpendicular to the longitudinal axis of the rod, more specifically for example in a plane parallel to this longitudinal axis. According to an embodiment, the end effector could also have an additional degree of freedom represented by a rotation around an axis coinciding with or being (parallel with) the longitudinal axis of the elongated portion or rod, all or not in addition to yet existing rotation of the elongated portion or rod around its longitudinal axis enabled or driven by the robot. According to an embodiment, a robotic system is provided wherein e.g. small parts (not necessarily excluding large parts) or target payloads are to be picked out of a box or bin, in a not fast moving manner. With not fast moving is meant for example that the speed of the robotic system is lower (or movements are slower) than maximal possible speed of the robot connected therewith. Small parts are for example in the order of centimetres dimension and weighing a few grams, whereas large parts are rather tens of centimetres big and weigh hundreds of grams. The motor is provided or attached to the rod (hence also connected to the rod), and is acting as means for generating movement (or flexibility) of (and hence controlling) the end effector. The motor is intended for positioning (e.g. rotating or orienting) the end effector. The additional degree of freedom (in addition to the ones provided by the robot) is for example represented by a rotation of the end effector, enabled (or driven) by the motor, up to 360° either clockwise or counter-clockwise. The motor is provided onto the rod at a distance (along the length of the rod, e.g. being at least halfway the length of the rod, away) from the robot. For example, the distance at which the motor is being provided onto the rod, may be close or equal to the entire length of the rod. In other words, the motor can be provided onto the rod in the vicinity of the rod's (other) end that is connected to the end effector. By means of the motor, the end effector is variable in position or orientation within a predetermined range, such as for example during picking of products out of the box or bin. Such variable position or orientation of the end effector is determined by at least one degree of freedom, whereas such at least one degree of freedom is for example defined by a rotation or rotational movement. In particular, such rotation or rotational movement could be around an axis which is not the longitudinal axis of the elongated portion or rod, or being parallel therewith. In other words, the axis (for rotational movement) is neither coinciding with the longitudinal axis of the elongated portion or rod, nor is the axis parallel with the longitudinal axis of the elongated portion or rod. Preferably the motor is positioned the closest as possible to the end effector, possibly entirely at the distal end of the rod. According to an embodiment, the bin picking system is configured having the motor close or the closest possible to the end effector, being controlled by the motor.

According to an embodiment, the motor is provided onto the rod in view of (or taking into account) the performance limits of the robot in terms of acceptable payload weight and/or moments, and/or avoiding the need of having (lengthy) transmissions elements between the motor and the end effector.

According to an embodiment, the elongated portion or rod is made of lightweight material such as carbon fibre.

Although large parts are not excluded from the invention (as referred to above), they might be more challenging in handling or picking operations. In case of large parts, we might need a heavier motor, and the rod is no longer made of e.g. carbon fibre but instead aluminium is used to carry the weight of larger pieces to be grabbed and picked. Moreover, as a result of the weight increase (as compared to small parts), the connection mechanisms of the robotic bin picking system could also be different, and for instance instead of simply gluing other ways of connecting by means of attachment (e.g. screwing, welding) are possibly used.

According to an embodiment, the bin picking system further comprises an encoder being connected to the rod (e.g. in the vicinity of the end effector) for determining the (variable) position of the end effector. An encoder is here defined as an electronic device, in particular a sensor turning a position into an electronic signal. Such encoder can be either an absolute encoder, giving an absolute position value, or else an incremental or relative encoder, counting (difference in) movement rather than (the exact) position. By means of example, an absolute rotary encoder, also called shaft encoder, could be used, converting angular position or motion of a shaft or axle into an electronic signal. According to an embodiment, the bin picking system further comprises a brake for fixing the positioning (e.g. rotation at 40°, clockwise or counter-clockwise, by means of the motor) of the end effector (during certain stage of the operation of the system, for instance during the placement (dropping) of the target payload and/or in case of failure of the motor). According to an embodiment, the bin picking system further comprises transmission elements, amongst which for example a cable, a belt (or strap) and/or an axle, between the motor and the end effector.

According to an embodiment, the motor is selected in accordance with the end effector, and the position (e.g. rotation or orientation) of the end effector is variable within a predetermined range, such as during picking (operation) of (one of) said products (or a target payload). The motor is for example a DC motor such as a brushless DC motor, as e.g. used in drone applications. Whenever someone or something collides with the DC motor, this may result in some (local) movement of this motor although it remains more or less in the same place. A brake (as referred to above) can hence also be useful for fixing the DC motor in a certain position, such that (local) movement due to colliding or bumping can be avoided.

In a second aspect, the invention provides a bin picking arrangement, comprising a robot and a bin picking system in accordance with the first aspect. According to an embodiment, the robot has performance limits in terms of acceptable payload weight and/or moments; and the distance, and the weight of the system, including the weight of the motor, the rod, the end effector, the encoder, the said transmissions elements (e.g. cable, belt, strap, sphere and/or axle between said motor and said end effector), and of the brake in case available, being selected in view of such performance limits and the products (hence the load) that the end effector is targeted to handle (including in view of the speed and/or velocities required in the target application).

It is considered important to go into a little more detail about the movement specifically of the motor at the end of the bin picking system, close to or at the end effector (e.g. at the end of the elongated rod). And this for example compared to the movements that the robot can already anticipate, or more particularly, compared to the situation when the motor is provided close to the robot (and hence e.g. at the other end of the elongated rod). Due to its placement or location at the end, the motor may only require small movements and moreover may generate rather rapid movements, which lead to small moments, in order to carry out fine motor actions and adjustments. By installing the motor at the end of the system, it is aimed to guarantee more accurate positioning than if the motor is positioned closer to the robot, as for example in the art. The movements of the motor at the end therefore can have a different and better effect in precise positioning and orientation compared to those when the motor is close to the robot. With regard to this difference in precision, it can be noted that a transmission or gearing (such as e.g. provided when the motor is positioned close to the robot) is always accompanied by an extra error on the final movements and also puts extra stress on the system or arrangement.

In a third aspect, the invention provides a bin picking set-up, comprising a bin picking arrangement, in accordance with the second aspect, and a container (or bin or box) placed on a support (floor) for containing the products. The support (floor) can be static or dynamic, i.e. can be movable or non-movable. Preferably, the arrangement is placed in the vicinity of (e.g. next to) the container on the support (floor). The bin picking set-up may further comprise an imaging system (e.g. one or more cameras) for determining positions of the end effector and the products. According to an embodiment, the length of the rod is at least 1.3 up to 1.5 times the height of the container out of which products need to be picked. According to an embodiment, the robot (of the bin picking arrangement) comprises a first controller exploiting the positions for operating the bin picking set-up, whereas the bin picking system (of the bin picking arrangement) comprises a second (independent of first) controller using the positions for operating the bin picking set-up.

In a further aspect, the invention provides methods of (continued/initiated) operation of a bin picking arrangement, in accordance with the second aspect, in a bin picking set-up in accordance with the third aspect. For example, the invention provides a method of operating a bin picking arrangement, wherein (movement of) the robot is controlled such that proximal end of said rod is never entering the container. According to another example, the invention provides a method of operating a bin picking arrangement, wherein during picking of (one of) the products, the brake in case available is disabled to thereby benefit from the flexibility of the motor, and wherein during placement (dropping) of (one of) the products, the brake in case available is enabled to thereby fix the positioning of the end effector (and hence of (one of) the products being held or gripped by the end effector). Further, a method may be provided of continued operation of a bin picking arrangement in case of failure of the motor, wherein the method comprises: after establishing the failure of the motor, use of gravity to put the end effector in a downward position, and thereafter, use of the brake in case available to fix the end effector in the downward position. This method may further comprise: after establishing the failure of the motor, adapting control of (or controlling) the robot to take the failure into account.

The invention further provides a method of initiating operation of a bin picking arrangement (for instance after a crash), wherein a first and/or a second controller being provided with position (e.g. rotation or orientation) information of the end effector by the encoder in case available. Herewith, the first controller is for controlling the robot, whereas the second controller is for controlling the motor (and brake or braking system).

The invention also provides a computer implemented method for determining for any system and/or arrangement from above, the distance, and the weight of the system (including the weight of the motor, the rod, the end effector, the encoder, the transmissions elements, and of the brake in case available). The method comprises: (i) inputting performance limits of the robot in terms of acceptable payload weight and/or moments; (ii) inputting the load of the products that the end effector is targeted to handle (including the speed and/or velocities required in the target application); and (iii) computing the total weight and/or moments and comparing those with the performance limits while selecting the distance, and the weight of the system (including the weight of the motor, the rod, the end effector, the encoder, the transmissions elements, and of the brake in case available).

In a further aspect, the invention provides a computer program product comprising a computer-readable code, that when run on a computer system causes the computer system to execute one of the methods above (of operating and/or controlling) in relation to the bin picking arrangement comprising the bin picking system with elongated portion and motor close to the end effector, and in particular benefitting from the (one or more) additional degree(s) of freedom provided therewith. According to an embodiment, the computer program product comprises computer-readable code, that when run on a computer system causes the computer system to generate suitable control signals for the motor and/or the brake for the methods of operation (or operating), for instance from loading sensorial information such as from the imaging system, such information pertaining to position information. The computer program product may further cause the computer system to input failure signals and generate according control signals. The first and/or second controller (e.g. as referred to in one of the methods above) may be or can include any type of electronic system (such as a microprocessor and/or microcontroller) and the computer program product may be executed thereon. The invention also provides a non-transitory machine-readable storage medium for storing the computer program product.

According to an aspect of the invention, a more general picking system is provided not necessarily for picking parts out of a bin, but for example picking up parts that are passing by on a conveyor band or belt. When doing so, picked up parts can be sorted from other parts further moving on the conveyor band, for which can be referred to e.g. when sorting waste. According to an embodiment, a bin picking platform comprising a robot with gripper, and a camera system, all being mounted on the same platform, further comprises a conveyor band (also mounted on the platform) onto which containers with stored parts are moving. Whenever a container is positioned under the camera system, the conveyor band is temporarily stopped such that parts can be selected and picked out (along the application) of this container. According to another embodiment, the bin picking platform doesn't comprise a conveyor band but instead an autonomous guided vehicle carrying a container is driving around in the factory hall where the bin picking platform is located. Whenever the autonomous guided vehicle with container is positioned under the camera system, the vehicle can be temporarily stopped such that parts can be selected and picked out (along the application) of the vehicle's container. The autonomous guided vehicle can also be interpreted as some kind of conveyor system, however having much more flexibility and dynamics than for example a conveyor band.

In an aspect of the invention, a picking set-up is provided comprising a picking arrangement and a conveyor system. The picking arrangement comprises a robot and a picking system for connecting to the robot. The picking system comprises: (i) an elongated portion, being connectable on one side (or end) to the robot, (ii) an end effector, for gripping and/or handling products and being connected to the other side (or end) of the elongated portion, and (iii) a motor, for positioning the end effector and being provided onto the elongated portion at a distance from the robot. The conveyor system has a conveying direction, and is carrying the products which are moving (i.e. being conveyed) along this conveying direction. The picking arrangement is placed in the vicinity of the conveyor system for picking one or more of the products that are thereby carried and moved along the conveying direction of the conveyor system. The picking set-up may comprise a first controller for controlling the robot and a second controller for controlling the motor, wherein the first and second controller are taking into account movements on the conveyor system. The picking set-up may further comprise an imaging system (comprising one or more cameras) for determining positions of the end effector and the products. According to an embodiment, the imaging system is able to track movement of the products (partially) along the conveying direction of the conveyor system. According to a preferred embodiment, the imaging system is arranged for moving at least (partially) along the conveying direction of the conveyor system.

### Brief description of the drawings

Figure 1 shows an embodiment of a bin picking set-up in accordance with the invention, comprising a robot, a bin picking system connected therewith and a bin out of which parts can be picked.
Figure 2 shows an embodiment of a bin picking arrangement in accordance with the invention, comprising a robot and connected bin picking system, illustrating the degree of freedom of the system's end effector.
Figure 3 shows an embodiment of the bin picking arrangement as in Figure 2, wherein the bin picking system further comprises a brake for fixing the positioning of the end effector.
Figure 4 shows another view of the embodiment of Figure 3.
Figure 5 shows another embodiment of a bin picking arrangement in accordance with the invention, comprising a robot and a bin picking system connected therewith.
Figure 6 shows yet another embodiment of a bin picking arrangement in accordance with the invention, comprising a robot and a bin picking system connected therewith.
Figure 7 shows an embodiment of an end effector comprising a gripping device and a suction device, in accordance with the invention.
Figure 8 shows an embodiment of a bin picking platform set-up comprising a robot with gripper, a container and a camera system in accordance with the invention.
Figure 9 shows another embodiment of a bin picking platform set-up comprising a conveyor band in accordance with the invention.

### Detailed description of the invention

The invention relates to a bin picking system for picking parts or goods out of a bin, and putting or dropping them somewhere else e.g. on a conveyor band or belt, in an automated or robotized manner. The term "bin" as used herein means, without limitation, any container, carton, box, tray or other structure that can receive, hold and store parts. Such bin picking system is often also referred to as handling system or end of arm tool, which is to be connected (possibly in a removable way) to a robot, in particular to its robot arm or the wrist at the end thereof, hence enabling the automation or robotization. The robot can be a cartesian or multi-axis robot (e.g. 3, 4, 5, or 6-axis robot) as known in the art, amongst which a 4 or 6-axis (as most often used in bin picking applications - although 3 and 5-axis are not excluded here) for example standardly having a base, a shoulder, a robot (upper and lower) arm, an elbow and a wrist. The bin picking system according to the invention comprises an elongated portion such as a rod or elongated rod, an end effector and a motor in a particular configuration, such that improved handling of parts is achieved. The elongated portion or rod may be encapsulated in (or may comprise) a housing, herewith providing a protection or cover for the rod, and possibly also for wires/hoses and/or electronics/pneumatics and/or further mechanical parts that are connected therewith or attached thereto. The elongated rod is for example made of carbon fibre, or another strong but light material. The elongated rod has two ends, of which one end is to be connected to the robot, in particular to a robot arm or the wrist thereof, and another end is connected to the end effector. The end effector could be a gripping device for electromechanically gripping parts from the bin. The end effector could also be a pneumatically operated suction device for sucking and releasing parts from one place to another. Moreover, the end effector could even be magnetically attracting and gripping parts out of the bin to be put at another location. According to an embodiment, the end effector is removably connected to the elongated rod, such that depending on the application of bin picking, a different type of end effector (e.g. gripping or sucking) could be chosen. According to an embodiment, the end effector comprises one or more handling devices for picking parts from a bin. For example, the end effector may comprise both gripping and suction device, and depending on the bin picking application, one or the other is selected for operation. The motor is for example a DC motor, such as a brushless DC motor, as e.g. used in drone applications. According to the particular configuration, the direct drive motor is provided onto the elongated rod at a distance from the robot, or its robot arm or wrist thereof. In other words, the motor is not mounted onto the robot, neither is it provided in the vicinity thereof. The distance at which the motor is placed onto the rod, and hence connected therewith, is for example at least halfway the length of the rod, away from the robot and towards the end effector. According to a preferred embodiment, the motor is provided onto the rod, close to or the closest possible to its end onto which the end effector is connected, i.e. being positioned at the distal end of the rod, or in the vicinity thereof. And thus, preferably, the motor is provided onto the rod, in the vicinity of the end effector to which it is connected. The location onto the rod where the motor is provided, is preferably in view of (or taking into account) the performance limits of the robot in terms of acceptable payload weight and/or moments, and/or avoiding the need of having (lengthy) transmissions elements between the motor and the end effector. The motor is connected to the end effector for enabling movement or actuation thereof, in particular for positioning the end effector in a certain direction, such that the parts that are randomly stored or lying in the bin can be reached and hence gripped or picked-up more easily. As a result, in addition to the degrees of freedom (defined by the number of axes of rotation) of the robot, at least one further degree of freedom is provided at the end effector, being controlled by the motor to which it is connected. Such degree of freedom is for example an additional rotational movement of the end effector up to 360°.

The invention also relates to a bin picking arrangement comprising the bin picking system as described above and a robot to which the system is connected. The invention further relates to a complete bin picking set-up, having such arrangement and a bin in place.

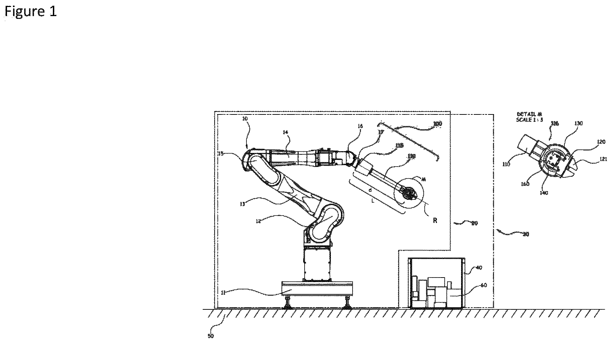

Figure 1 shows an embodiment of a bin picking set-up 30 in accordance with the invention, comprising a bin picking arrangement 20 and a bin 40 out of which parts 60 can be picked. The parts 60 are for example small objects (whereas large objects are not excluded), regular or irregular shaped, and randomly stored in the bin 40. The bin 40 is for example placed on a support or floor 50 in the vicinity of the bin picking arrangement 20, and possibly on the same support or floor 50 thereof. The bin picking arrangement 20 comprises a multi-axis robot 10 and a bin picking system 100. As illustrated, the robot 10 has a base 11 standing or mounted on the support or floor 50. The robot 10 is further characterized by typically having a shoulder 12, an upper arm 13 and a lower arm 14, and an elbow 15 there in between. At the end of the lower arm 14, a wrist 16 having a flange portion 17 can be recognized. The bin picking system 100 is provided onto the robot 10, in particular being connected thereto for creating the bin picking arrangement 20. This connection could be configured as removable, meaning that different types of bin picking systems could be connected (and removed again) and depending on the application of bin picking e.g. smaller or larger parts, heavy or light parts, a particular bin picking system 100 is chosen or selected. More specifically, the bin picking system 100 comprising an elongated rod 110 having a length L, is mounted onto the flange portion 17 of the robot's wrist 16. Herewith, one end 115, also referred to as proximal end of the elongated rod 110, is connected (possibly in a removable manner) to the flange portion 17. At distal end of the elongated rod, a part M is encircled, and zoomed out as detail M, right from the main drawing. As illustrated in detail M, the bin picking system 100 further comprises an end effector 120 for gripping (or handling e.g. sucking) parts 60, and a motor 130 (hence part M for Motor being part of it) for positioning (e.g. rotating or orienting) the end effector 120 during picking operation, herewith improving the gripping process. In addition to the one end 115, another end 116 is indicated, which can also be referred to as distal end of the elongated rod 110 (as earlier mentioned). At the other or distal end 116 of the elongated rod 110, the end effector 120 of the bin picking system 100 is connected. The elongated rod 110 not only has a length L, but is also indicated with a longitudinal axis R being a central axis of the elongated rod 110 along its length L. According to an embodiment, the elongated rod 110 can be rotated around its longitudinal axis R. Such rotation could be enabled or driven by the robot 10 being in direct connection with the rod 110 at its proximal end 115, although this is not necessarily the case. The motor 130 is provided onto the elongated rod 110, at a distance d from the rod's one end 115. According to the embodiment shown, the distance d is rather large, and hence the motor 130 is mounted close or adjacent to the end effector 120, or at least in the vicinity thereof. As a result, the distance d here at which the motor 130 is attached to the elongated rod 110, is becoming close or equal to the rod's entire length L. The end effector 120 is connected also to the motor 130 for enabling motorized control, in particular positioning by means of e.g. rotational movement of the end effector 120. The end effector 120 is thus arranged with further degree of freedom, in addition to the degrees of freedom delivered by the robot 10. The further degree of freedom given by the end effector 120 could be for example the rotational movement as mentioned above, although even more degree of freedom is not excluded. For instance, the end effector could represent further degree of freedom, defined as further rotational movement in addition to the one from above. The advantage of having the motor 130 provided at the end 116 of the rod's length, so close (as depicted here) to the end effector 120 is that the connection between motor 130 and end effector 120 is rather short (or made close, in proximity), and hence control or performance (of the motor) in terms of e.g. payload or weight (of parts) is achieved as good as possible. The bin picking system 100 may further comprise an encoder 140 for determining the position (e.g. rotation or orientation) of the end effector 120. Such encoder 140 may also be connected to the elongated rod 110, for example in the vicinity of the end effector 120. The bin picking system 100 may further comprise transmission elements 160 (which can be reduced to a minimum (length or size) in case the motor 130 is provided close to the end effector 120), amongst which for example a cable, a belt, a gearing system and/or an axle, between the motor 130 and the end effector 120, for transmitting e.g. force, power or energy from the one (i.e. the motor 130) to the other (i.e. the end effector 120).

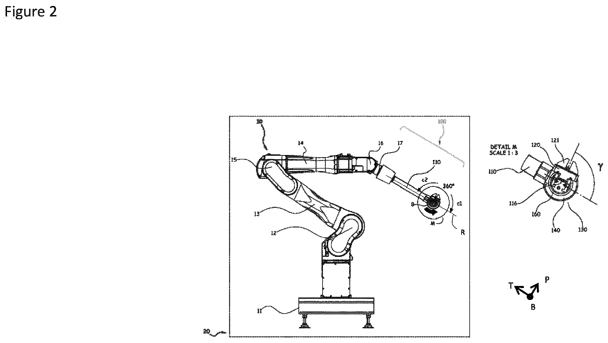

Figure 2 shows an embodiment of a bin picking arrangement 20 in accordance with the invention, comprising a robot 10 and a bin picking system 100, illustrating particularly the degree of freedom of the system's end effector 120. The different parts that can be identified in the bin picking arrangement 20, or in the robot 10 and the bin picking system 100 thereof, are comparable with what is shown in Figure 1. For example, the robot 10 is again a multi-axis robot, e.g. for convenience a 4-axis or 6-axis (i.e. resulting respectively in 4 or 6 degrees of freedom defined by 4 or 6 possible rotations around these axes) as most commonly used (although e.g. 5-axis is not particularly excluded), comprising standard components such as a base 11, a shoulder 12, an upper arm 13 and a lower arm 14 with an elbow 15 in between, as well as a wrist 16 having a flange portion 17. In addition to the end effector 120, the elongated rod 110 and the motor 130 are also part of the bin picking system 100. The end effector 120 represents a further degree of freedom in addition to the ones delivered by the robot, which is determined by the fact that the end effector 120 can be rotated around an axis B (perpendicular to the drawing), and this e.g. for about 360° clockwise or counter-clockwise as indicated by the arrows c1, c2. Hence, the further degree of freedom is a further rotation (or rotational movement) in addition to the rotations provided by the multi-axis robot. The further rotation is controlled by the motor 130 to which the end effector 120 is connected. It is noted that the axis B is also perpendicular to the longitudinal axis R of the elongated rod 110. According to an embodiment, the end effector 120 could also have an additional degree of freedom represented by a rotation around an axis coinciding with or being parallel to the longitudinal axis R of the elongated rod 110 Such additional degree of freedom or rotation around the longitudinal axis R (or parallel therewith) could be in combination with a (yet existing) rotation of the elongated rod 110 itself being enabled or driven by the robot 10 via the robot lower arm 14 and connected wrist 16 and flange portion 17. According to a specific embodiment, the rotation of the elongated rod 110 driven by the robot 10 has different rotational properties, e.g. angular range, steps or speed, than the rotation of the end effector 120 controlled by the motor 130. A difference in rotational properties is for example provided for fine tuning the position of the end effector 120, or possibly to overcome restrictions due to configuration or geometry of the bin picking system 100, or in particular of the end effector 120 thereof. For example, because of such restrictions or limitations, one rotational movement around the longitudinal axis R (e.g. of the elongated rod 110) could be taken over by the other one (e.g. of the end effector 120), or vice versa. According to a further embodiment, there is no rotation of the elongated rod 110 provided, and for example the only rotation around the longitudinal axis R is driven by the motor 130 for enabling rotation of the end effector 120 around this longitudinal axis R. The end effector 120 comprises claws (or fingers) 121 with which parts 60 from the bin 40 (shown in Figure 1) can be gripped or grabbed. These claws 121 are pointing outwardly in view of the bin picking system 100, or the end effector 120 thereof. By means of rotation of the end effector 120, its claws 121 will follow this rotation (as being (semi) fixed on the end effector 120) and as a result the claws 121 will be oriented (outward) differently peripheral to (or around) the axis B of rotation. In comparison with Figure 1, the end effector 120 in Figure 2 is now rotated for an angle γ= γ1 (here about 95°) such that the orientation of the end effector 120 and its claws 121 has changed for this angle γ = γ1 around the rotation axis B. This way, the positioning (of the end effector 120 with its claws 121) for gripping parts 60 can be adjusted, leading to a better position or orientation for grabbing parts 60 that are lying for example in a corner of the bin 40, against a wall of the bin 40, or just amongst other parts 60 that are randomly stored or stacked in the bin 40. Hence gripping during bin picking operation is improved, by means of the further degree of freedom of the end effector 120.

According to an embodiment, the degree of freedom of the end effector 120 can be further extended. In other words, not just one degree of freedom but more than one or multiple degrees of freedom can also be provided for the end effector 120. For example, in addition to the further degree of freedom being determined by a rotation around the axis B, even more degrees of freedom for the end effector 120 may be provided, amongst which a rotation around an axis T, and/or a rotation around an axis P. The axis T can be defined as, or being parallel with, the central axis or longitudinal axis R of the elongated rod 110, being perpendicular to the axis B. The axis P can be defined as the axis being perpendicular to the axis T and the axis B respectively. Hence, the axes B, T, and P are forming a rectangular coordinate system, and with the three additional movements i.e. rotations defined around these axes, the end effector 120 can be positioned or oriented with its claws 121 in any spherical direction, unless when being limited or restricted by the configuration or design of the end effector 120. For example, the claws 121 of the end effector 120 may prohibit at a certain position or orientation further rotation of the end effector 120, because they get in the way for further movement.

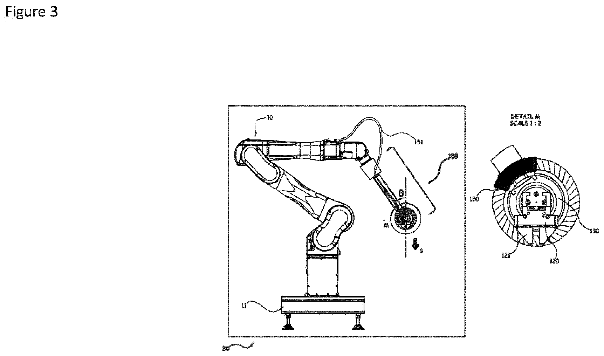

Figure 3 shows an embodiment of a bin picking arrangement 20 in accordance with the invention, comprising a robot 10 and a bin picking system 100, wherein the bin picking system 100 further comprises a brake 150 for fixing the positioning of the end effector 120. The positioning of the end effector 120 is for example enabled by rotational movement, clockwise or counter-clockwise, controlled by the motor 130, and then e.g. fixed at an angle θ = θ1 (here of about 35°) by the brake 150. The brake 150 is for example a pneumatic or electromagnetic brake wherein compressed air is sent via hose 151 to activate it. Making use of gravity, the end effector 120 in fixed position can be oriented with the claws 121 downwards (as indicated also by the arrow G), and gripping of a part 60 can take place. Fixing the position of the end effector 120 could be required during certain stage of the bin picking system's operation, for instance during the placement (or dropping) of the target payload i.e. parts 60, and/or in case of failure of the motor 130. Hence, according to an alternative embodiment, the bin picking system doesn't comprise the (direct drive) motor as described above, and is controlled merely passively, i.e. having no active drive system, by a pneumatic brake.

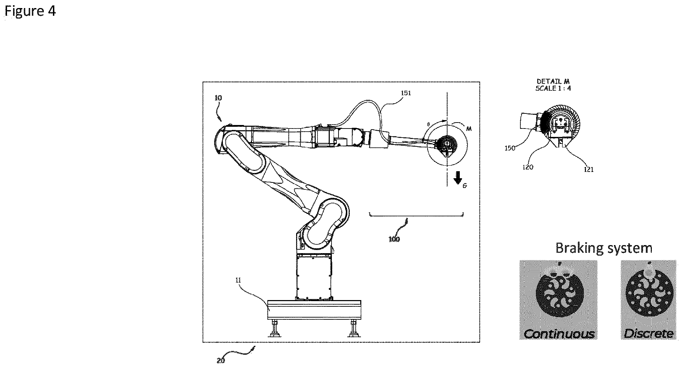

The brake 150 can be implied as a continuous or as a discrete braking system as illustrated in Figure 4, depicting also another view of the embodiment of the bin picking arrangement 20 of Figure 3. The end effector 120 is now fixed at an angle θ = θ2 (here of about 85°) by the brake 150, and then oriented again with the claws 121 downwards. By means of example, the brake 150 is implied as a continuous braking system. For a continuous braking system can be referred to for example the working principle of a brake disc (e.g. of a bicycle or car) as known in the art. Braking occurs then over the entire disc or wheel or over a range thereof. Alternatively, a discrete braking system can be used, which implies more specific braking, i.e. braking along and whenever a hole is reached. Discrete braking can be chosen for example in case exact positioning is of major importance.

Consider again the bin picking arrangement 20 as described before e.g. with Figure 1. According to an embodiment, the robot 10 has performance limits in terms of acceptable payload weight and/or moments. Therefore, the distance d, and the weight of the system 100 including the weight of the motor 130, the weight of the elongated portion 110, the weight of the end effector 120, the weight of the encoder 140, the weight of the transmissions elements 160, and the weight of the brake 150 in case available, and the performance specifications of the motor, are for example particularly selected in view of such performance limits but also in view of the products 60 that the end effector 120 is targeted to handle including the performance requirements (e.g. velocities) of the target application. In particular when considering for example the use of such bin picking arrangement 20 in a bin picking set-up 30, also described earlier e.g. with Figure 1, according to an embodiment, the robot 10 could be controlled such that the one end 115 (or proximal end) of the elongated portion 110 is never entering the container 40.

According to an embodiment, the bin picking arrangement 20 comprises a first and/or a second controller, wherein the first controller is intended for controlling the robot 10, and the second controller is meant for controlling the motor 130. The first and/or second controller, e.g. in particular the response time setting thereof, could be designed in order to take into account that the robot 10 has performance limits in terms of acceptable payload weight and/or moments and further being selected in view of the products 60 that the end effector 120 is targeted to handle including the performance requirements (e.g. velocities) of the target application. In particular when considering for example the use of such bin picking arrangement 20 in a bin picking set-up 30, according to an embodiment, the robot 10 could be controlled such that the one end 115 (or proximal end) of the elongated portion 110 is never entering the container 40.

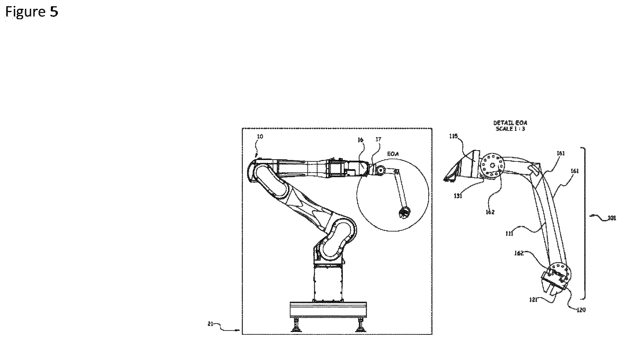

Figure 5 shows an embodiment of a bin picking arrangement 21 in accordance with the invention, comprising a robot 10 and a bin picking system 101 having again an elongated rod 111, a motor 131 and an end effector 120, connected to the motor 131 for enabling further degree of freedom in addition to the ones delivered by the robot 10 itself. The elongated rod 111 is now bent, and the motor 131 is provided onto the flange portion 17 of the robot's wrist 16, and thus in the vicinity of the rod's proximal end 115. Hence, there is no distance between the motor 131 and the robot 10 as opposed to the embodiments of Figures 1 to 4. Transmission elements 161, 162 are provided between the motor 131 and the end effector 120, and are much more pronounced and significant as in the embodiments of Figures 1 to 4. They are for example defined by cables 161 and gearings 162.

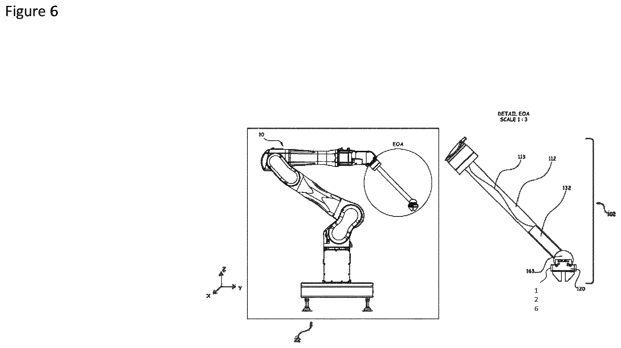

Figure 6 shows an embodiment of a bin picking arrangement 22 in accordance with the invention, comprising a robot 10 and a bin picking system 102 having an elongated rod 112, a motor 132 and an end effector 120. The elongated rod 112 is hollow, and the motor 132 is a tube motor - or tubular (shaped) motor, known in the art - for example provided within the hollow tube of the rod 112, wherein a power wire 113 is also shown. The end effector 120 is again connected to the motor 132 for enabling further degree of freedom in addition to the ones delivered by the robot 10 itself. In between the motor 132 and the end effector 120 a connection or transmission element 163 is provided, in the form of a dome or sphere. The spherical connector or spherical element 163 may be mounted onto the rod 112 and in connection with the tube motor 132 such that it can be rotated for 360° in or along (or parallel with) e.g. the xy-plane, yz-plane and/or xz-plane, herewith referring to xyz coordinate system indicated left from the main drawing of the bin picking arrangement 22. In other words, according to an embodiment, the spherical element 163 can move 360° in all directions, unless limited or restricted by the geometry of the end effector 120 being connected therewith. For example, here, the end effector 120 is designed with a collar 126 having edges which will collide at a certain moment with the elongated rod 112 when rotating the spherical element 163 in a direction towards the elongated rod 112. By means of this rotatable spherical element 163, the end effector 120 being connected therewith can also be positioned or oriented in a certain spherical direction, and hence is also rotatable (together with the spherical element 163) to a certain (predetermined) degree, defining its degree of freedom, or in this case possibly even its multiple degrees of freedom.

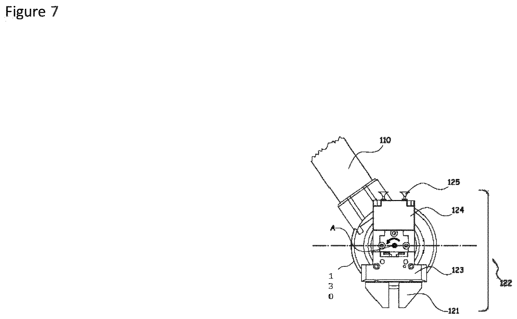

Figure 7 shows an embodiment of an end effector 122 connected to the rod 110 of a bin picking system, wherein the end effector 122 has both a gripping device 123 and a suction device 124 in accordance with the invention. A motor 130 is again provided for positioning (e.g. rotating or orienting) the end effector 122 during picking operation The end effector 122 is now oriented such that the claws 121 of the gripping device 123 are pointing downwards. Herewith is defined that the end effector 122 is selected in the mode for acting with gripping functionality. The end effector 122 can be oriented differently, by rotation around an axis A (perpendicular to the drawing), and whenever rotated for 180° (clockwise or counter-clockwise) from the situation as depicted, the suction cups 125 of the suction device 124 will be oriented downwards. The end effector 122 will then be selected in the mode for acting with suction functionality.

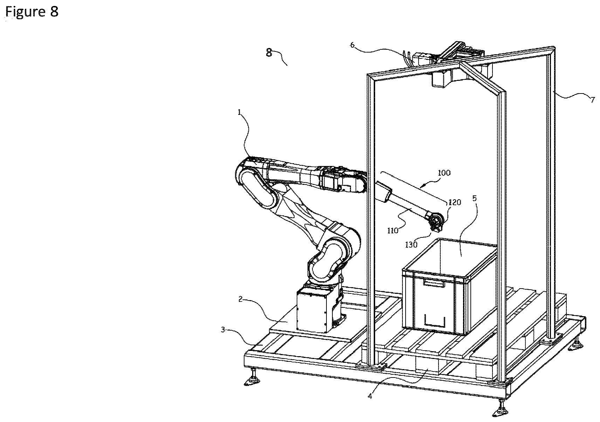

Figure 8 shows an embodiment of a bin picking platform set-up 8 comprising a robot 1 with gripper or gripping end-of-arm tool 100, a container 5 and a camera system 6 in accordance with the invention. The robot 1 is mounted on a support 2, fixed to a platform 3. The container 5 is placed specifically below the camera system 6, and onto a pallet 4 mounted onto the same platform 3. A frame 7 is provided (and fixed onto the platform 3) for mounting the camera system 6. The gripping end-of-arm tool 100, earlier referred to as bin picking system, is at one end connected to the robot 1, possibly being even removably connected thereto. The gripping end-of-arm tool 100 comprises an elongated portion 110 (e.g. a rod), an end effector 120 (e.g. a gripping device) and a motor 130 (e.g. a brushless DC motor). Within the container 5, parts (not shown) can be stored, which can be selectively picked out by the gripper e.g. depending on the application, and the selection for instance being based on the feedback given by the camera system 6. Such feedback could be pure information or raw data captured (e.g. images), but could also include analysis or processing thereof (e.g. image analysis or processing).

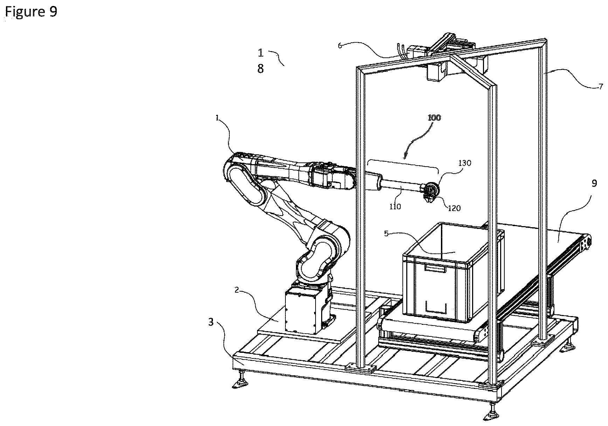

Figure 9 shows another embodiment of a bin picking platform set-up 18 in accordance with the invention. The set-up 18 comprises again a robot 1 with gripper or gripping end-of-arm tool 100 and support 2, as well as a camera system 6 provided onto a frame 7. The (robot) support 2 and the (camera) frame 7 are mounted, and possibly fixed onto the platform 3. The set-up 18 further comprises a conveyor band 9 (also mounted on the platform 3) onto which a container 5 is put with stored parts (not shown). In practice, more containers (with stored goods) will be present and will move onto the conveyor band 9, but for simplicity of the drawing, only one container 5 is depicted here. Whenever the container 5 is positioned under the camera system 6, as illustrated in Figure 9, the conveyor band 9 is temporarily stopped such that parts can be selected and picked out (along the application, and e.g. based on camera images) of this container 5.

According to a variant embodiment of Figure 9, a picking platform set-up is provided in accordance with the invention. This picking platform set-up is more general, meaning not necessarily comprising a bin or container out of which parts or goods are to be picked. More generally speaking, the parts or goods can now be picked for example directly from the conveyor band instead of out of a box that is moving (and temporarily stopped beneath the camera system) onto the conveyor band.

## Claims

1. A bin picking system (100) for connecting to a robot (10), said system (100) comprising: (i) an elongated portion (110), having a length (L) and a longitudinal axis (R) along said length (L), and being connectable on one end (115) to said robot (10), (ii) an end effector (120), for gripping and/or handling products (60), being connected to another end (116) of said elongated portion (110), and (iii) a motor (130) for positioning said end effector (120), being provided onto said elongated portion (110) at a distance (d) from said robot (10), wherein the distance (d) is close or equal to the length (L) of said elongated portion (110), and wherein said end effector (120) is variable in position within a predetermined range, such as during picking of said products (60), wherein said variable position is defined by at least one degree of freedom.

2. The bin picking system (100) of claim 1, wherein the at least one degree of freedom is a rotational movement around an axis not coinciding with or not being parallel to the longitudinal axis (R) of said elongated portion (110).

3. The bin picking system (100) of claim 1 or 2, wherein the elongated portion (110) being made of lightweight material such as carbon fibre.

4. The bin picking system (100) of claim 1 to 3, further comprising an encoder (140) being connected to said elongated portion (110) for determining the variable position of said end effector (120), and/or further comprising a brake (150) for fixing the positioning of said end effector (120).

5. The bin picking system (100) of claim 1 to 4, further comprising one or more transmission elements (160, 163), amongst which for example a cable, a belt, gearing and/or an axle, or in the form of a dome or sphere, between said motor (130) and said end effector (120).

6. The bin picking system (100) of claim 1 to 5, wherein said motor (130) being selected in accordance with said end effector (120), and wherein the motor being for example a DC motor.

7. A bin picking arrangement (20) comprising: a robot (10), and a bin picking system (100) in accordance with claim 1 to 6.

8. The bin picking arrangement (20) of claim 7, wherein said robot (10) having performance limits in terms of acceptable payload weight and/or moments; and the distance (d), and the weight of the system (100) including the weight of said motor (130), the weight of said elongated portion (110), the weight of said end effector (120), the weight of said encoder (140), the weight of said transmissions elements (160), and the weight of said brake (150) in case available, being selected in view of said performance limits and said products (60) that said end effector (120) is targeted to handle.

9. A bin picking set-up (30) comprising: a bin picking arrangement (20) in accordance with claim 7 or 8, and a container (40) placed on a support (50) for containing said products (60), wherein said arrangement (20) being placed in the vicinity of said container (40) on the support (50).

10. The bin picking set-up (30) of claim 9, further comprising an imaging system for determining the variable position of said end effector (120) and said products (60).

11. A method of operating a bin picking arrangement (20) in accordance with claim 7 or 8 in a bin picking set-up (30) in accordance with claim 9 or 10, wherein said robot (10) is controlled such that the one end (115) of said elongated portion (110) is never entering the container (40).

12. A method of operating a bin picking arrangement (20) in accordance with claim 7 or 8, wherein during picking of said products (60), said brake (150) in case available is disabled to thereby benefit from the flexibility of said motor (130), and wherein during placement of said products (60), said brake (150) in case available is enabled to thereby fix the positioning of said end effector.

13. A method of continued operation of a bin picking arrangement (20) in accordance with claim 7 or 8 in case of failure of said motor (130), said method comprising: after establishing the failure of said motor (130), use of gravity to put said end effector (120) in a downward position, and thereafter use of said brake (150) in case available to fix said end effector (120) in said downward position.

14. The method of claim 13, further comprising: after establishing the failure of said motor (130), adapting control of said robot (10) to take the failure into account.

15. A method of initiating operation of a bin picking arrangement (20) in accordance with claim 7 or 8 in a bin picking set-up (30) in accordance with claim 9 or 10, wherein a first and/or a second controller, said first controller for controlling said robot (10) and said second controller for controlling said motor (130) and/or said brake (150), being provided with position information of said end effector (120) by said encoder (140) in case available.
